# EUROPEAN PATENT APPLICATION

(11) **EP 4 778 781 A2**
(43) Date of publication of application: **22.07.2026**
(21) Application number: 26177084.6
(22) Date of filing: 13.02.2023
(51) Int. Cl.: B60N 2/28

(54) **A CHILD VEHICLE SEAT AS WELL AS A BASE SUITABLE FOR SUCH A CHILD VEHICLE SEAT**

(62) Divisional of application: 23156275.2
(71) Applicant: Maxi Miliaan B.V., 5704 RD Helmond (NL)
(72) Inventor: Toonders, Sander Gerardus, 5554 ET Valkenswaard (NL); Van Montfort, Donald Hendrikus, 6093 EL Heythuysen (NL)
(74) Representative: Veldman-Dijkers, Cornelia G. C.

(57) **Abstract**

A child vehicle seat comprises a base detachably connectable to a vehicle seat, a rotating part being rotatable with respect to the base about a rotation axis from at least a forward facing position or a rearward facing position seen in a driving directing of the vehicle in use to a side facing position directed to a door of the vehicle and vice versa, a sliding part being slidable with respect to the base in a sliding direction substantially perpendicular to the driving direction of the vehicle, and child seat connected to the base via the sliding part and the rotating part. The child seat and the sliding part are slidable together with respect to the rotating part, wherein the child vehicle seat comprises first locking means to detachably lock the rotating part to the base in the at least forward facing position or rearward facing position, as well as second locking means to detachably lock sliding of the sliding part with respect to the rotating part.

## Description

### FIELD OF THE INVENTION

The invention relates to a child vehicle seat comprising a base detachably connectable to a vehicle seat, and a child seat detachably connected to the base, whereby the child vehicle seat is provided with unlocking means to unlock the connection between the child seat and the base.

The invention also relates to a base suitable for such a child vehicle seat.

### BACKGROUND OF THE INVENTION

A child vehicle seat as known from US7984946B1 comprises in one embodiment, a base unit that may be secured to a vehicle seat, a coupling unit extendably and retractably coupled to the base unit, and a safety seat pivotally and removably coupled to the coupling unit. The safety seat may be rotated to face a door entry of the vehicle allowing direct access to the front of the safety seat. Further, the safety seat may be extended toward the door entry of the vehicle, thereby shortening the distance the person loading the child must extend to safely place the child in the safety seat. By rotating and extending the safety seat, the handling of the child is simplified and decrease the likelihood of mishandling the child or causing injury to the person loading the child. The safety seat may then be retracted back to a position over the base unit and locked into place, and the safety seat may be rotated toward the front or back of the vehicle and locked into place providing a secured safety seat for the child.

A disadvantage of the known child vehicle seat is that the safety seat can also be rotated when being extended towards the door entry. This means that the part being located to the door entry comprises a rotating mechanism, which adds weight to part being extended towards the door entry. A disadvantage of the added weight is that the child vehicle seat will pivot relatively easily in the direction of the door about an axis extending parallel to the driving direction of the vehicle.

Another disadvantage is that the rotating mechanism may conflict with vehicle interior part, such as wheel arches or side parts of the backrest of the vehicle.

Another disadvantage is that the coupling unit can be moved for example partly towards the door entry, without the safety seat being rotated towards the door entry. This has the risk that since the child sitting in the safety seat is still looking in a forward facing or rearward facing direction, that a parent is not aware that the safety seat child is not in the correct and locked position for being used when driving the vehicle.

Another disadvantage is that the rail portions and linear slots will always extend perpendicular to the driving direction of the vehicle. This means that during a crash, forces will be exerted on the rail portions and linear slots in a direction perpendicular to the driving direction of the vehicle so that the rail portions and linear slots needs to be relatively thick and heavy to be able to absorb these forces. The child vehicle seat is therefor provided with a higher attachment strap which needs to be released every time that a parent wants to rotate the child seat.

### SUMMARY OF THE INVENTION

At least one of the objects of the invention is to provide a child vehicle seat whereby a safe and reliable connection between the child seat and the base is obtained.

This object is accomplished with the child vehicle seat according to the invention in that the base is provided with pivotable hooks being connectable to connecting elements of the child seat, whereby the hooks are movable against spring force by means of a movable part to an open position wherein the child seat can be removed from the base, which movable part extends from the front side to the rear side of the child vehicle seat, whereby the movable part is provided with an additional movable part being movable in opposite direction as the movable part, whereby a first set of hooks is pivotable by means of the movable part in a first direction, whilst a second set of hooks is pivotable by means of the additional movable part in a second direction being opposite to the first direction.

The movable part forms the unlocking means.

Preferably moving the movable part in one direction will automatically cause the additional movable part to move in opposite direction, so that both sets of hook are being pivoted at the same time to unlock all hooks.

Another object of the invention is to provide a child vehicle seat whereby less pivoting force is exerted on the base when the child seat is being moved towards the door of the vehicle.

This object is accomplished with the child vehicle seat according to the invention in that the child vehicle seat comprises a rotating part being rotatable with respect to the base about a rotation axis from at least a forward facing position or a rearward facing position seen in a driving directing of the vehicle in use to a side facing position directed to a door of the vehicle and vice versa, a sliding part being slidable with respect to the base in a sliding direction substantially perpendicular to the driving direction of the vehicle, a child seat connected to the base via the sliding part and the rotating part, wherein the child seat and the sliding part are slidable together with respect to the rotating part, wherein the child vehicle seat comprises first locking means to detachably lock the rotating part to the base in the at least forward facing position or rearward facing position, as well as second locking means to detachably lock sliding of the sliding part with respect to the rotating part.

Since the sliding part is mounted on top of the rotating part, the rotating part will only be rotated with respect to the base and not be moved towards the door.

Furthermore, the base or rotating part can easily be provided with means to prevent the sliding part to be slidable with respect to the rotating part when the rotating part is in a forward facing position or a rearward facing position of the child seat, even if the second locking means would be unlocked.

Preferably the child seat is pivotable with respect to the rotating part from the forward facing position to the rearward facing position. It is however also possible to be only being pivotable between the forward facing position or the rearward facing position and the side facing position.

Preferably the child seat is pivotable with respect to the rotating part in two different directions to be able to reach a side facing position looking to each of the doors on each sides of the vehicle.

During driving of the vehicle, the sliding direction extends in the driving direction of the vehicle. By means of the second locking means as well as possible other means the sliding part is maintained firmly fixed to the rotating part during such a crash.

Another embodiment of the child vehicle seat according to the invention is characterized in that by unlocking the first locking means the rotating part together with the sliding part and child seat are rotatable to the side facing position, whereby near or at the side facing position the second locking means will be automatically unlocked to allow the sliding part together with the child seat to slide in the sliding direction.

By automatically unlocking the second locking means a person operating the child vehicle seat needs only to unlock the first locking means. This simplifies the operation of the child vehicle seat. Furthermore, it prevents that the second locking means are being unlocked before the child seat is rotated into the side facing direction.

Another embodiment of the child vehicle seat according to the invention is characterized in that the first locking means comprises a first and second handle located on opposite sides of the child vehicle seat, whereby a locking pen is moved out of a locking hole against spring force by moving the first handle in clockwise direction about the rotation axis or moving the second handle in counter clockwise direction about the rotation axis.

When the child seat is located near one door of the vehicle the shortest way to be rotated to the side facing direction will be clockwise whilst being located to the other door of the vehicle the shortest way to be rotated to the side facing direction facing that door will be counter clockwise. The person operating the child vehicle seat will automatically use the handle being close to the door and automatically move the handle in the correct direction to rotate the child seat towards said door, thereby unlocking the first locking means. The rotation direction of the child seat will hereby depend on whether the child seat starts from the forward facing position or the rearward facing position.

Another embodiment of the child vehicle seat according to the invention is characterized in that the locking pen is movable connected to the rotating part, whilst the locking hole is located in the base.

This has the advantage that the locking pen has a defined position with respect to rotating part, so that independent if the rotating part with the sliding part and the child seat are in a forward facing position or the rearward facing position, the locking pen can always be operated by means of the handles. In this manner the handles are being used to unlock the locking pens as well as to rotate the rotating part after unlocking the first locking means.

Another embodiment of the child vehicle seat according to the invention is characterized in that the first locking means detachably lock the rotating part to the base in the at least forward facing position as well as the rearward facing position.

This has the advantage that with one locking means the rotating part can be locked in both the forward facing position as well as the rearward facing position.

Another embodiment of the child vehicle seat according to the invention is characterized in that the second locking means comprises at least one engagement element movably extending through an opening in the rotating part, which engagement element is movable through the opening from a first position wherein the engagement element is located in an engagement hole of the sliding part and the opening to lock the sliding part with respect to the rotatable part, to a second position wherein the engagement element is located in an engagement hole of the base and the opening to limit rotation of the rotatable part with respect to the base to a predetermined angle.

With the engagement element the rotating part is either locked to the sliding part or to the base. If desired the base can have more than one engagement holes so that the rotating part can be locked with respect to the base in for example both side facing positions. These side facing positions can be predetermined fixed positions in which case the engagement hole of the base part and the opening allow no rotation of the rotatable part with respect to the base if the engagement element is located in the engagement hole of the base part and the opening. However, if desired that at the side facing position the sliding part and the child seat mounted thereon should be allowed to move over a relatively small predetermined angle to compensate for the orientation of the child vehicle seat with respect to the vehicle seat and the door of the vehicle, the engagement hole in the base can be a slot enabling the engagement element to slide in said slot and allowing a limited rotation of the rotatable part with respect to the base.

Another embodiment of the child vehicle seat according to the invention is characterized in that the predetermined angle is in the range from zero degrees to 20 degrees, more preferably 10 degrees.

When being zero degrees the rotatable part is not pivotable with respect to the base. In the range from more than 0 degrees to 20 degrees the rotating part, the sliding part mounted on the rotating part as well as the child seat mounted on the sliding part can slightly rotate with respect to the base so that the child seat can be positioned in a desired side facing position suitable for the vehicle in which the child vehicle seat is mounted.

Another embodiment of the child vehicle seat according to the invention is characterized in that the sliding part is slidable in the sliding direction from a start position via at least one intermediate position to an end position.

At the start position the sliding part is located in the position on the rotating part, wherein the rotating part together with the sliding part can be rotated between the forward facing position, the facing side positions and the rearward facing position. When the rotating part together with the sliding part is in the side facing position, the sliding part is slidable with respect to the rotating part in the sliding direction from the start position via at least one intermediate position to the end position and vice versa.

At the end position the child seat mounted on the sliding part is located near or outside the door of the vehicle. In the at least one intermediate position the child seat mounted on the sliding part is in a position between the start position and the end position. This might be desirable in some situations, for example when the door of the vehicle can not be completely be opened or if the end position cannot be reached because of specific geometries in the vehicle.

In each position the rotating part remains located above the base.

Another embodiment of the child vehicle seat according to the invention is characterized in that at least at one of the start position, the at least one intermediate position or the end position, the sliding part must overcome a predetermined force before being able to slide from its current position to a next position.

With the need to overcome a predetermined force, the person operating the child vehicle seat will notice when the specific position is being reached. Furthermore, when removing the child seat from or placing the child seat on the sliding part, the siding part will remain its position, unless a force larger that the predetermined force is exerted on the sliding part, making it easier to remove or mount the child seat from or on the sliding part and/or to install the child into the child seat or remove the child from the child seat.

Another embodiment of the child vehicle seat according to the invention is characterized in that the sliding part or the rotating part is provided with a pen being located under the predetermined spring force in a dent located in the other of the sliding part or the rotating part.

With such a pen-dent combination it is relatively simple to define the start position, the intermediate position(s) and/or the end position.

Another embodiment of the child vehicle seat according to the invention is characterized in that the pen has a rounded end being located in a hemisphere shaped dent.

Such a pen-dent combination can easily be made. The force can easily be changed by changing the shape of the dent or the spring force of the spring depending on the desired force to move from one position to the next position.

Another embodiment of the child vehicle seat according to the invention is characterized in that the pen has a frustoconical shaped end being located in a frustoconical shaped dent.

Due to the frustoconical shape the pen and dent can easily be connected and disconnected.

Another embodiment of the child vehicle seat according to the invention is characterized in that the frustoconical shaped dent has inclined walls, having different angles at opposite sides of the dent.

In this manner the force to remove the pen from the dent will be different at the opposite sides. With a large angle it will be easy to move the pen out of the dent whilst with a small angle it will be harder to move the pen out of the dent. In this manner, the dent to define an intermediate position might have different angles so that it is easier to move from the intermediate position to the end position than to the start position, or the other way around, depending on the desired function of the intermediate position.

Another embodiment of the child vehicle seat according to the invention is characterized in that the frustoconical shaped dents have inclined walls, having different angles at the start position, the at least one intermediate position and/or the end position.

Depending on the predetermined angles, it might be easier and requiring less force to move from the intermediate position to the end position or the start position, than from the start position and end position to the intermediate position or the other way around, depending on the desired function of each position.

Another embodiment of the child vehicle seat according to the invention is characterized in that the child seat is detachably connected to the sliding part, whereby the child vehicle seat is provided with unlocking means to unlock the connection between the child seat and the sliding part, which unlocking means are located on a front side as well as on the rear side of the child vehicle seat.

This has the advantage that independent if the child seat is located in a forward facing position or a rearward facing position, a person operating the child vehicle seat can always easily operate either the unlocking means located on the front side or on the rear side of the child vehicle seat.

### BRIEF DESCRIPTION OF THE DRAWINGS

The child seat vehicle according to the invention will further be explained with reference to the drawings, wherein,
figure 1 is an exploded perspective view of a first embodiment of a child vehicle seat according to the invention,
figure 2 is a half-exploded and half assembled perspective view of the child vehicle seat as shown in figure 1,
figure 3 is an assembled perspective view of a rotating part and a base of the child vehicle seat as shown in figure 1, with the rotating part being locked to the base,
figure 3A is an enlarged view of detail IIIA of figure 3,
figure 4 is an exploded perspective view of a part of first locking means of child vehicle seat as shown in figure 1,
figure 5 is a top view of figure 3,
figure 5A is a cross-sectional view along line F-F of figure 5,
figure 5B is across-sectional view along line G-G of figure 5,
figure 5C is an enlarged view of detail VC shown in figure 5,
figure 5D is an enlarged view of detail VD shown in figure 5,
figure 5E is an enlarged view of detail VE shown in figure 5A,
figure 5F is an enlarged view of detail VF shown in figure 5B,
figure 6 is an assembled perspective view of a rotating part and a base of the child vehicle seat as shown in figure 1, with the rotating part being locked to the base, in a rotated position,
figure 6A is an enlarged view of detail VIA shown in figure 6,
figure 7 is a top view of figure 6,
figure 7A is a cross-sectional view along line C-C of figure 7,
figure 7B is an enlarged view of detail VIIB shown in figure 7A,
figure 7C is a cross-sectional view along line D-D of figure 7,
figure 8 is an assembled perspective view of a sliding part of the child vehicle seat as shown in figure 1, the sliding part being locked in an unsliding-out position,
figure 9 is a top view of figure 8,
figure 9A is a cross-sectional view along line E-E of figure 9,
figure 9B is an enlarged view of detail VIIB shown in figure 9A,
figure 10 is an assembled perspective view of the sliding part, the sliding part being locked in an intermediate position,
figure 11 is an exploded perspective view of detail XI of figure 10, showing a first embodiment of a pen-dent mechanism of the child vehicle seat,
figure 12 is a top view of figure 10,
figure 12A is across-sectional view along line H-H of figure 12,
figure 12B is an enlarged view of detail XIIB shown in figure 12A,
figure 12C is a cross-sectional view along line I-I of figure 12,
figure 12D is an enlarged view of detail XIID shown in figure 12C,
figure 12E is a cross-sectional view along line J-J of figure 12,
figure 12F is an enlarged view of detail XIIF shown in figure 12E,
figure 13 is an exploded perspective view of detail XIVA of figure 14, showing a second embodiment of a pen-dent mechanism of the child vehicle seat,
figure 14 is a cross-sectional view of the sliding part with a second embodiment of a pen-dent mechanism of the child vehicle seat,
figure 14A is an enlarged view of detail XIVA shown in figure 14,
figure 15 is an exploded perspective view of a child seat unlocking means of the child vehicle seat as shown in figure 1,
figure 15A is an enlarged view of detail XVA shown in figure 15,
figure 15B is an enlarged view of detail XVB shown in figure 15
figure 16 is an assembled perspective view of the child seat unlocking means as shown in figure 15, in which the child seat unlocking means being in locked state,
figure 16A is an enlarged view of detail XVIA shown in figure 16,
figure 16B is an enlarged view of detail XVIB shown in figure 16,
figure 16C is an enlarged view of detail XVIC shown in figure 16,
figure 17 is an assembled perspective view of the child seat unlocking means, in which child seat unlocking means being in unlocked state,
figure 17A is an enlarged view of detail XVIIA shown in figure 17,
figure 17B is an enlarged view of detail XVIIB shown in figure 17,
figure 17C is an enlarged view of detail XVIIC shown in figure 17,
figure 18 is perspective view of the child vehicle seat as shown in figure 1, in which the child vehicle seat being in a forward facing position,
figure 19 is perspective view of the child vehicle seat as shown in figure 1, in which the child vehicle seat being in a side facing position,
figure 20 is perspective view of the child vehicle seat as shown in figure 1, in which the child vehicle seat being in a side facing position, whereby the sliding part is in an sliding-out position,
figure 21 is a front view of a child vehicle seat seen in a direction opposite to the driving direction of the vehicle, whereby a first kind of child seat is in a side facing position,
figure 22 is a front view of a child vehicle seat seen in a direction opposite to the driving direction of the vehicle, whereby a second kind of child seat is in a side facing position.

In the drawings, like reference numerals refer to like elements.

### DESCRIPTION OF PREFERRED EMBODIMENTS

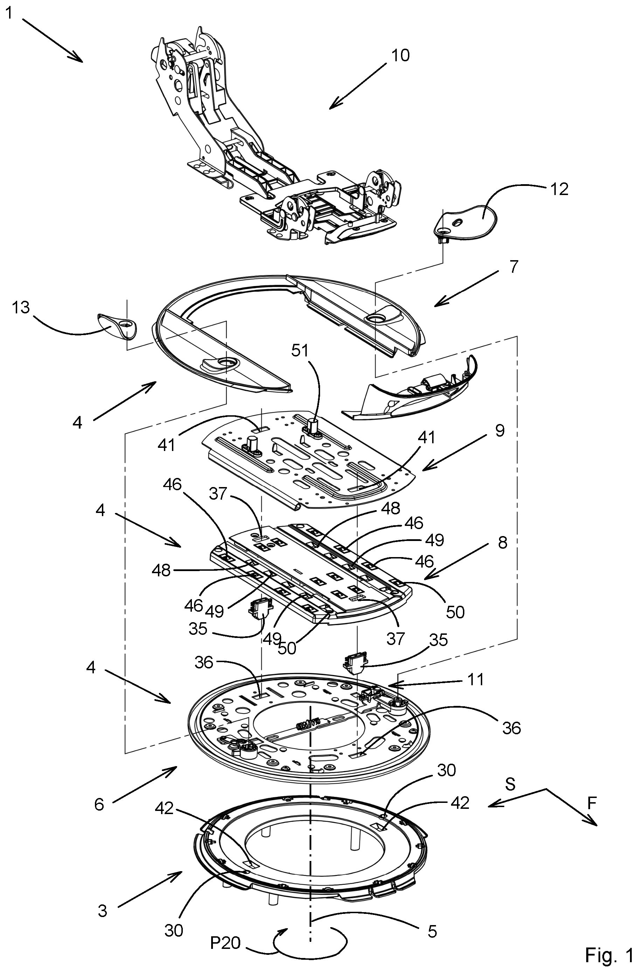

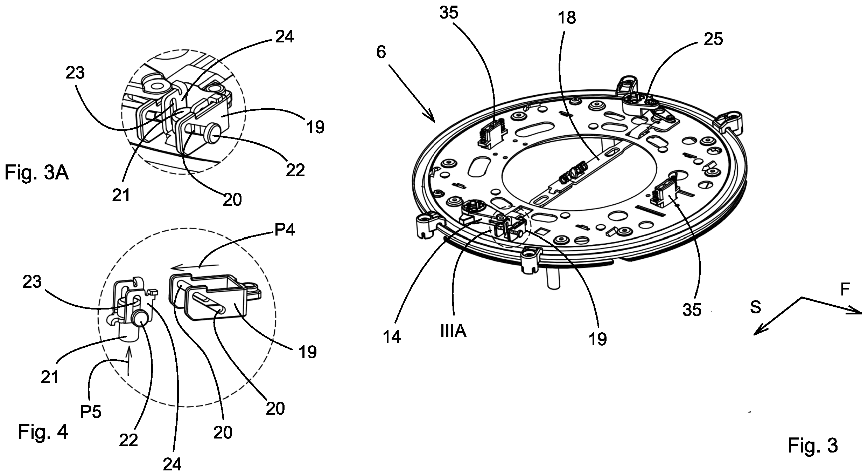

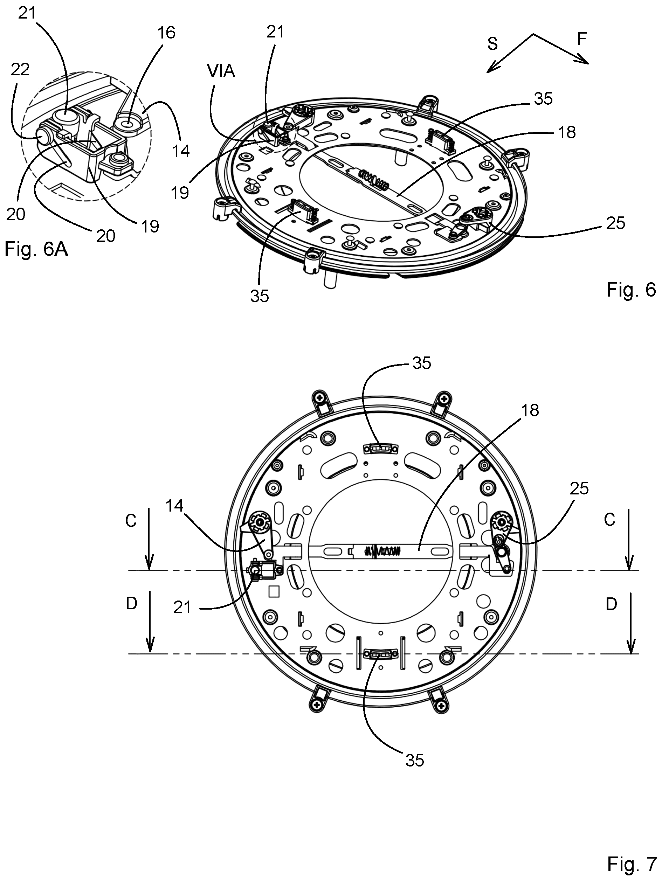

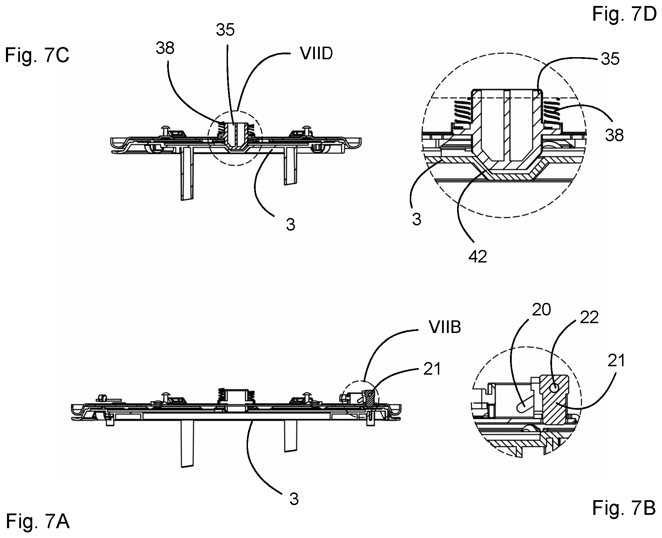

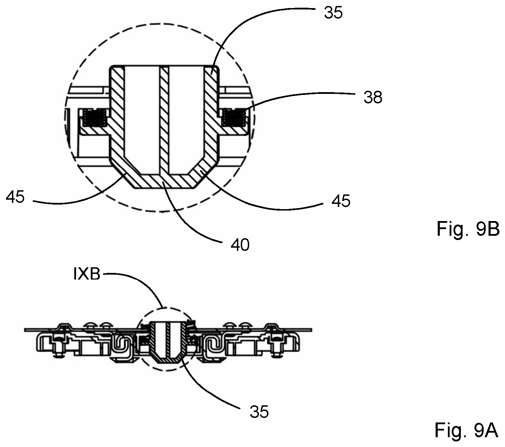

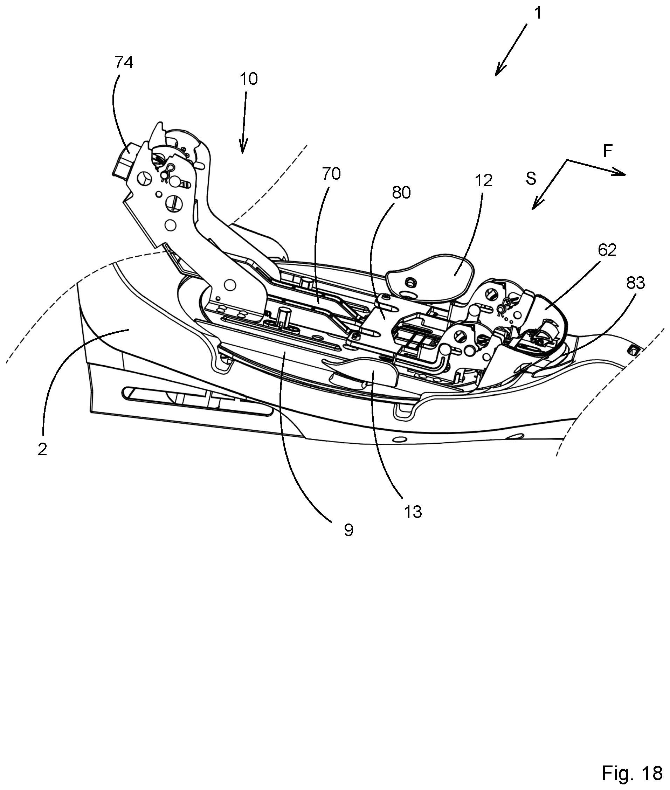

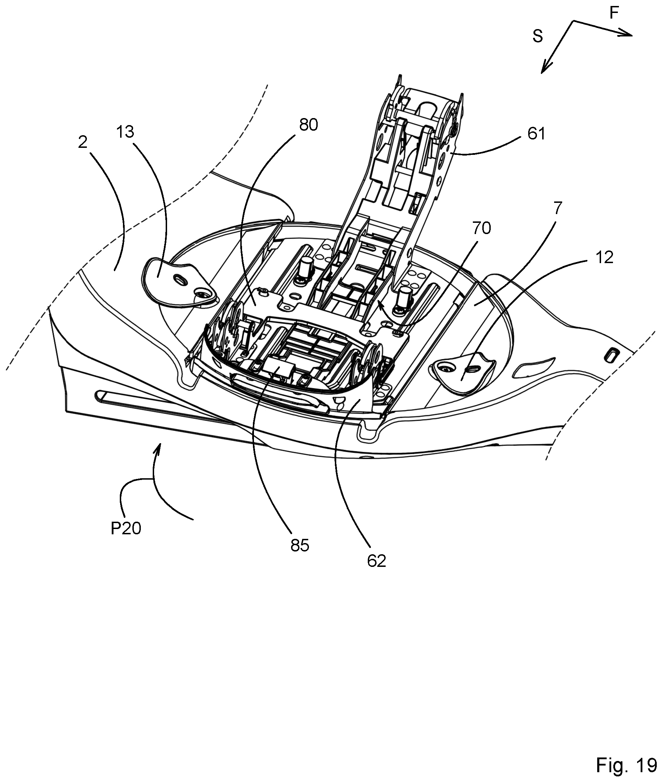

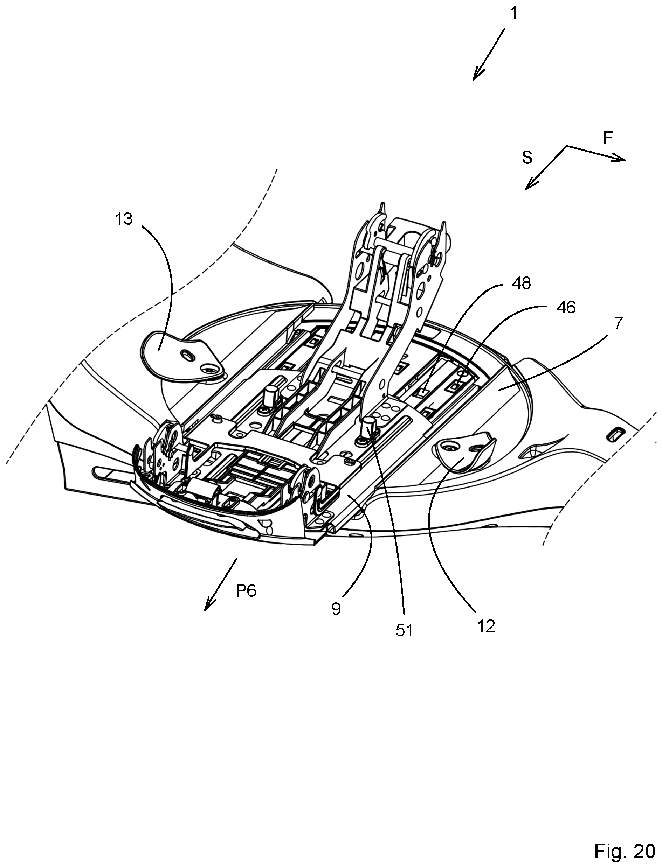

The figures 1-22 show a child vehicle seat 1 according to the invention.
The child vehicle seat 1 comprises a base 2 (see figures 18-22) detachably connectable to a vehicle seat. In figure 1 only a base plate 3 of the base 2 is shown. The base plate 3 is fixed to the base 2.
The child vehicle seat 1 further comprises a rotating part 4 being rotatable with respect to the base 2 about a rotation axis 5 from a forward facing position as shown in figure 18 seen in a driving direction F of the vehicle in use to a side facing position as shown in the figures 18, 19 directed to in a sliding direction S towards a door of the vehicle to a rearward facing position and to a side facing position directed to another door of the vehicle. The sliding direction S extends substantially perpendicular to the driving direction F. The rotating part 4 comprises bottom plate 6, a top plate 7 and a guiding plate 8 located between the bottom plate 6 and the top plate 7.

The child vehicle seat 1 further comprises a sliding part 9 being slidable with respect to the guiding plate 8 of the rotating part 4. As will be explained here below, the sliding part 9 being slidable with respect to the guiding plate 8 in the sliding direction S, when the rotating part 4 is being rotated to one of the side facing positions directed to one of the doors of the vehicle.

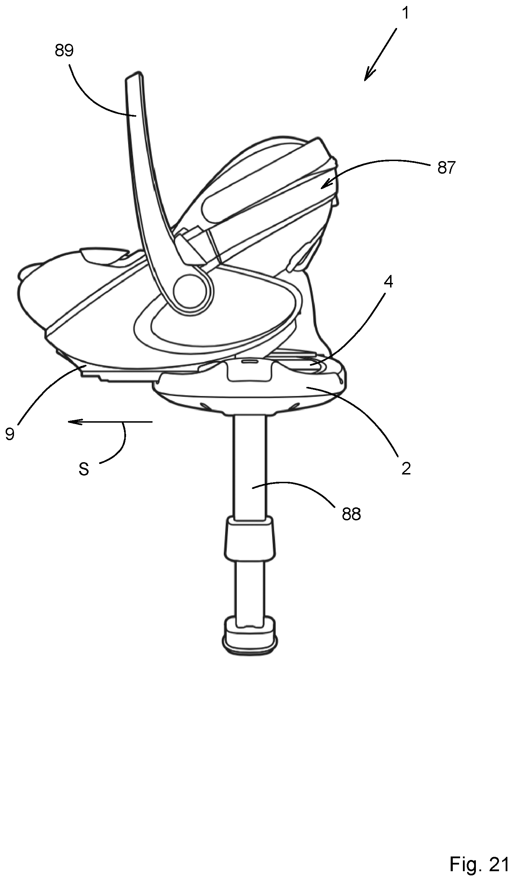

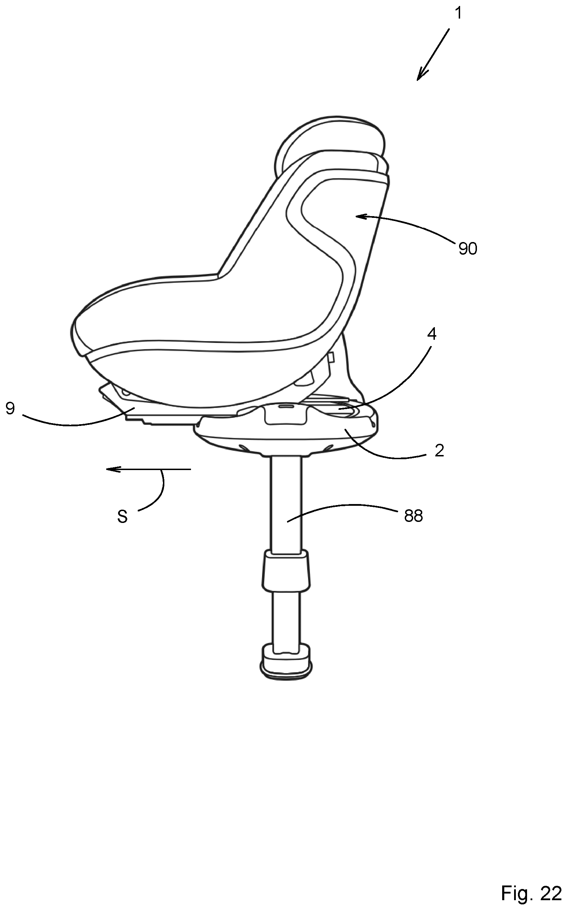

Mounted on top of the sliding part 7 is a mounting element 10 for detachable holding a child seat. For the sake of clarity, the child seat is not shown in the figures 1-20 but only in the figures 21 and 22.

Figure 1 show the base plate 3, the rotating part 4 rotatably connected on top of the base plate 3 and the sliding part 7 being slidable connected on top of the rotating part 4. The child vehicle seat 1 comprises first locking means 11 to detachably lock the rotating part to the base 2 in the forward facing position and the rearward facing position. The child vehicle seat 1 also comprises second locking means to detachably lock sliding of the sliding part 9 with respect to the rotating part 4.

As will be further explained here below, unlocking of the first locking means 11 enable the rotating part 4 together with the sliding part 9, the mounting element 10 and the child seat to rotate about the rotation axis 5. Near or at the side facing positions the second locking means will be automatically unlocked to allow the sliding part 9, the mounting element 10 and the child seat to slide in the sliding direction S.

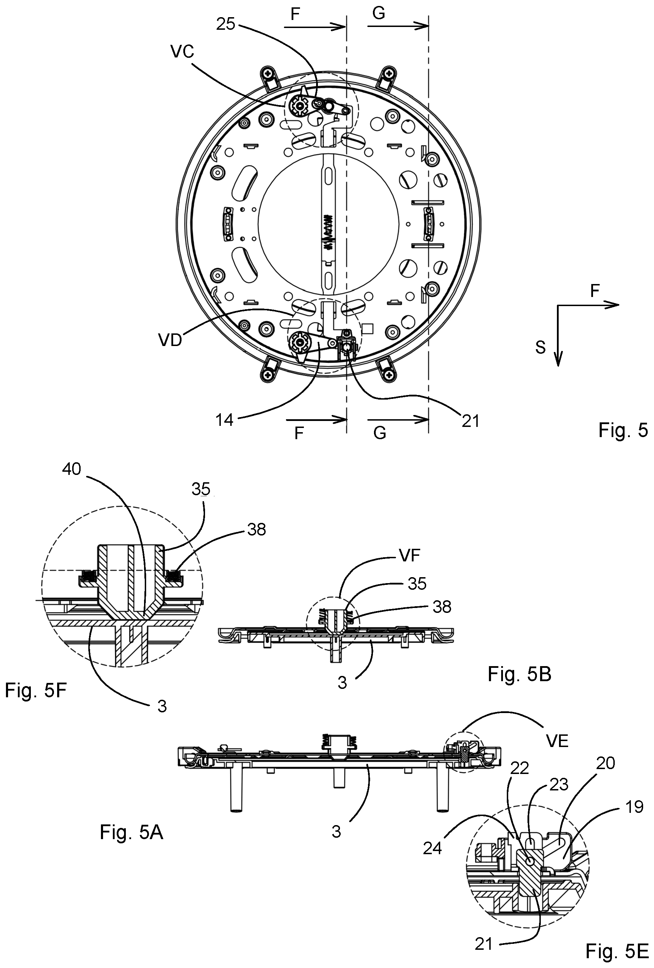

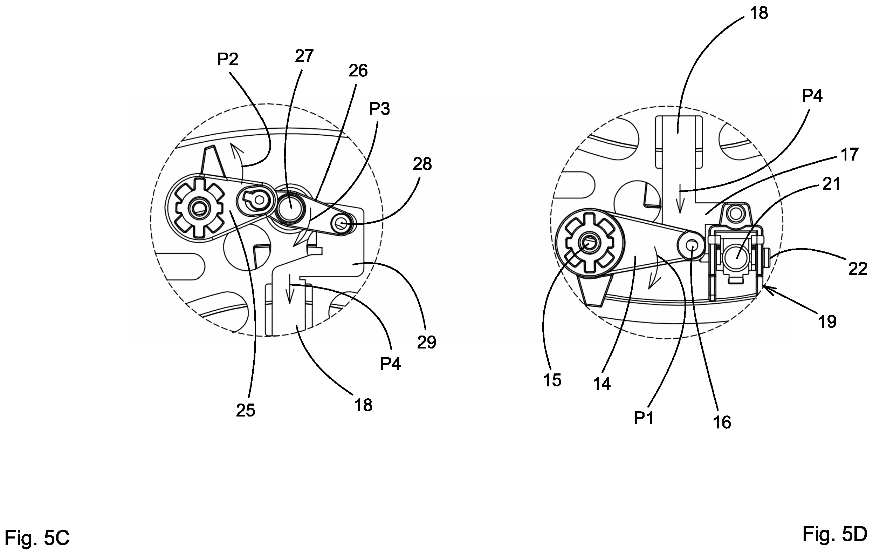

The first locking means 11 comprises a first and second handle 12, 13 located on opposite sides of the child vehicle seat 1. The handle 12 is provided with a connecting piece 14 being pivotable about pivot axis 15 (fig. 5D) in a direction indicated by arrow P1. An end 16 of connecting piece 14 is pivotably connected to a first end 17 of a longitudinal rod 18 extending to the other handle 13. Also connected to this first end 17 is a holder 19. The holder 19 is provided with two slots 20 extending under an angle with the vertical and horizontal. A vertically extending locking pen 21 is located between the slots 20. A horizontal pen 22 extends through the locking pen 21 and is slidably located in the slots 20. The horizontal pen is further slidably located in a vertically extending slot 23 of a bracket 24. The bracket 24 is fixed to the bottom plate 6 of the rotating part 4.

As can be seen in figure 5C, the handle 13 is provided with a connecting piece 25 being pivotable in a direction indicated by arrow P2. The connecting piece 25 is connected to a lever 26. The lever 26 is pivotable about a pivot axis 27 in a direction indicated by arrow P3. An end 28 of the lever 26 is pivotably connected to a second end 29 of the longitudinal rod 18 extending to the other handle 12.

By actuating the handle 12 or the handle 13, the connecting pieces 14, 25 connected thereto will also be pivoted due to which the longitudinal rod 18 will be moved in the direction as indicated by arrow P4. When moving the longitudinal rod 18 in the direction as indicated by arrow P4, the holder 19 will be moved in this direction as well. The horizontal pen 22 will slide in the slots 20 in upward direction as indicated by arrow P5 whereby the vertically extending locking pen 21 will be moved upwardly as well. Before moving upwardly, the end of the locking pen 21 is located in one of two locking holes 30 of the bottom plate 6 of the base 2, thereby locking the rotating part 4 to the base 2. By moving the locking pen 21 out of the locking hole 30, the rotating part 4 is being unlocked from the base 2 and can be rotated about the rotation axis 5 in the direction as indicated by arrow P20.

One of the locking holes 30 is used to lock the rotating part 4 to the base 2 in a forward facing position of the child seat whilst the other locking hole 30 is being used to lock the rotating part 4 to the base 2 in a rearward facing position of the child seat.

The second locking means comprises two engagement elements 35 extending through openings 36 in the bottom plate 6 and the openings 37 in the guiding plate 8. The engagement elements 35 are pressed in the direction of the base plate 3 by means of springs 38, whereby the bottom 40 of the engagement element 35 is located against the baseplate 3. Upper parts of the engagement elements 35 are located in engagement holes 41 of the sliding part 9 thereby locking the sliding part 9 to the bottom plate 6 and the guiding plate 8 of the rotating part 4.

When the rotating part 4 is being rotated with respect to the base plate 3, the bottom 40 of the engagement elements 35 will slide over the base plate 3 until the engagement elements 35 will reach engagement holes 42 of the base plate 3. As soon as the engagement elements 35 reach the engagement holes 42 of the base plate 3, the engagement elements 35 will be moved under spring force of springs 38 into the engagement holes 42, thereby locking the rotating part 4 to the base 4, moving out of the engagement holes 41 of the sliding part 9 and unlocking the sliding part 9 from the rotating part 4.

The rotating part 4 will be locked to the base in a position whereby the child seat is in one of the two side facing directions.

In the shown embodiment, the engagement elements 35 are located opposite to each other in a line being substantially perpendicular to the longitudinal rod 18. Due to this orientation, the locking holes 30 and the engagement holes 42 of the base plate 3 are located closely together. However, other arrangements are also possible.

In the shown embodiment the engagement holes 42 have the same dimensions as the bottom 40 of the engagement elements 35 so that the engagement element 35 fits nicely in the engagement hole 42. Sides of the bottom 40 are provided with sloped parts 45 as are the engagement holes 42. Due to the sloped parts 45 the engagement elements 35 can easily be moved out of the engagement holes 42 against spring force of the springs 38 when the rotating part 4 is being rotated again with respect to the base 2.

If desired the engagement hole 42 may be longer in the direction of rotation of the rotating part 4 than the engagement element 35 so that the rotating part 4 can slightly rotate with respect to the base 2 in the side facing position over a predetermined angle being between 0 and 20 degrees, more preferably 10 degrees.

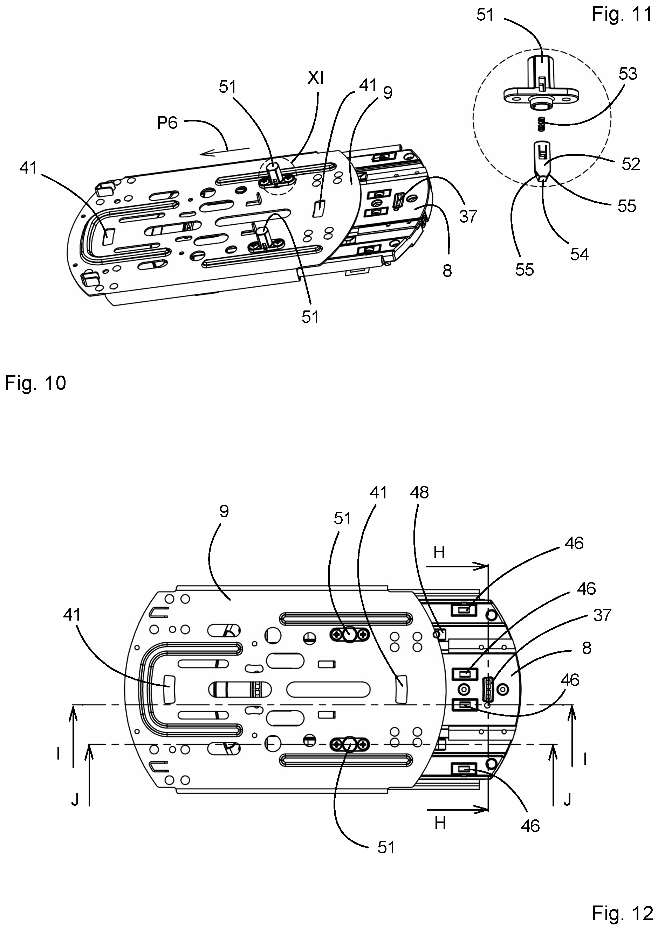

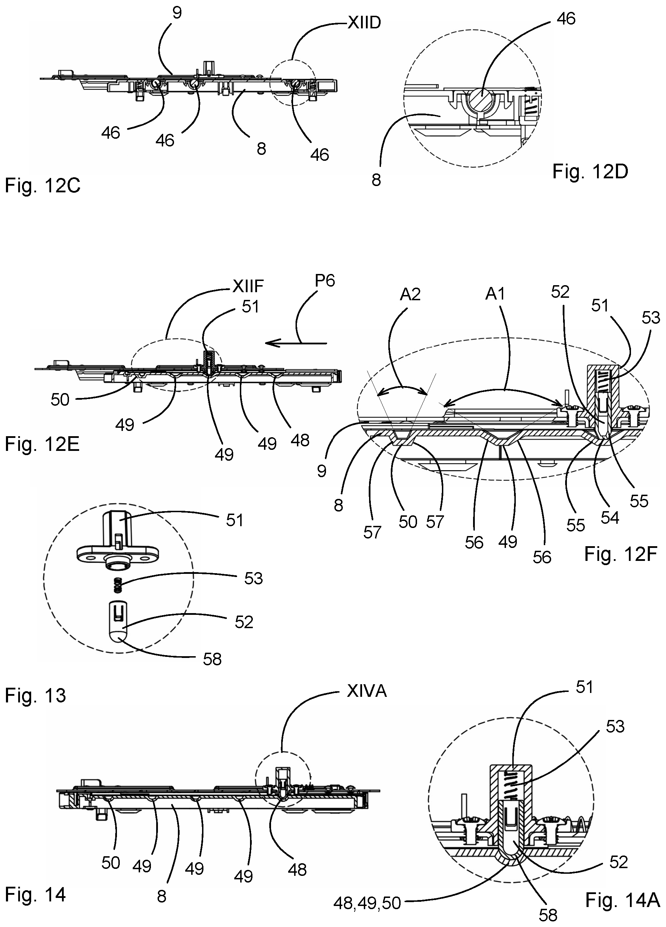

The guiding part 8 is provided with bearings 46, see figures 12C and 12D to facilitate the sliding of the sliding part 9 with respect to the guiding part 8, the bearings 46 can be ball bearings or roller bearings. Due to the bearings 46 the force to move the sliding part 9 with respect to the guiding part 8 is relative low which is very convenient during sliding of the sliding part 9.

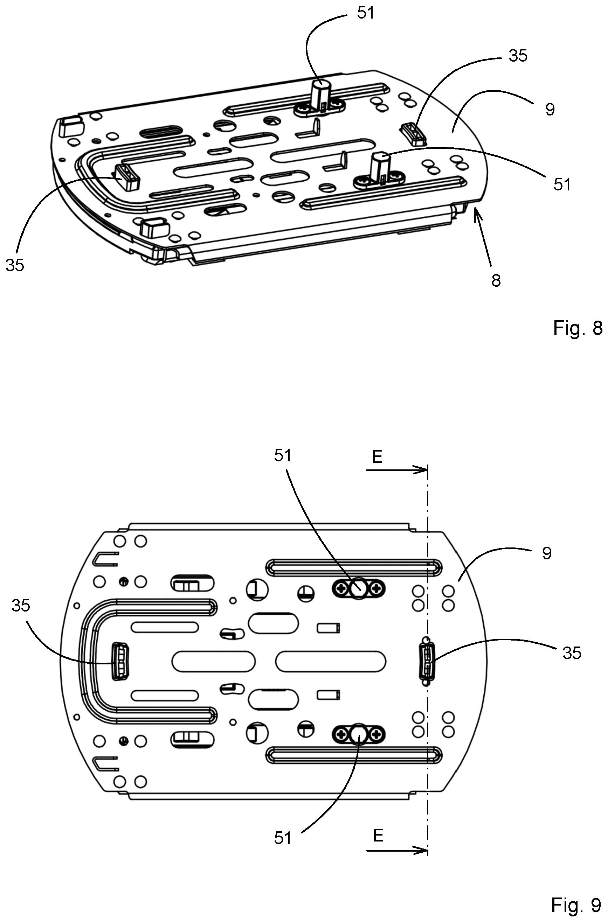

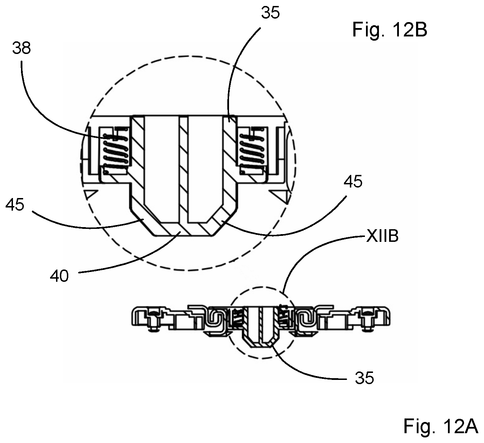

However, when a parent wants to remove the child from the child seat, remove the child seat from the mounting element 10 or place the child back into the child seat or place the child seat back onto the mounting element 10 a more firm connection between the sliding part 9 and the guiding part 8 would be appreciated so that the sliding part 9 will not or nearly not move with respect to the guiding part 8. Such a more firm connection is realized by the child seat at a start position as shown in figure 8, a number of intermediate positions (one as shown in figures 10, 12) and an end position of the sliding part 9 with respect to the guiding part 8. The end position is the position wherein the sliding part 9 has slit as far as possible with respect to the guiding part 8. At the start position the sliding part 9 is located completely above the guiding part 8.

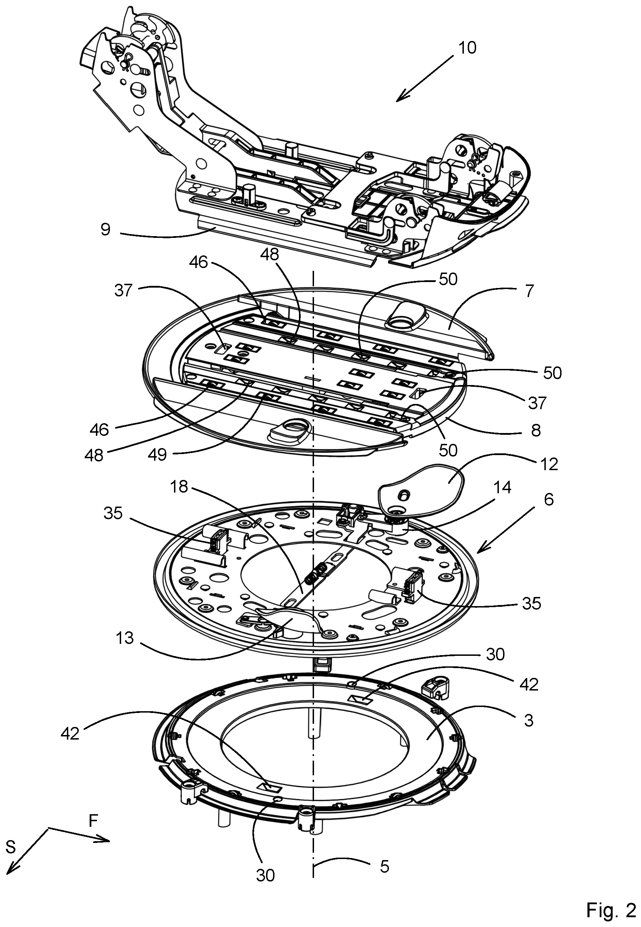

To define the start position, in this embodiment three intermediate positions and the end position, the guiding plate 8 is at each position provided with two rows of dents 48, 49, 50 (see a.0. figures 1, 2). The dents 48 define the start position, the dents 49 the three different intermediate positions and the dents 50 the end positions.

More or less intermediate positions can be realised by removing or covering dents or by adding dents.

To softly lock the sliding part 9 with respect to the guiding part 8 at the dents 48, 49, 50, the sliding part 9 is provided with two holders 51 mounted on top of the sliding part 9. Each holder 51 comprises a pen 52 and a spring 53 located between a top of the pen 52 and the holder 51. The lower end of the pen 52 rests under spring force of the spring 53 against the top surface of the guiding part 8 and is located on a line extending through the dents 48, 49, 50.

By the embodiment as shown in figures 11, 12E, 12F, the lower end 54 of the pen 52 comprises on two opposite sides inclined surfaces 55 so that the lower end 54 is frustoconical shaped. By the embodiment of as shown in figures 12E, 12F the dents 49 at the intermediate positions have inclined surfaces 56 defining an angle A1 between them, whilst the dent 48, 50 at the start and end positions have inclined surfaces 57 defining an angle A2 between them, whereby angle A2 is smaller than angle A1. So the dents are frustoconical shaped. When moving the sliding part 9 with respect to the guiding part 8 in or opposite to the direction as indicted by arrow P6, the lower end 54 will slide over the top surface of the guiding part 8 until the lower end 54 will reach a dent 48, 49, 50, whereby the pen 52 will be moved under spring force of spring 53 into the dent 48, 49, 50. When a person pushes or pulls on the sliding part 9 with a relatively low force, the pens 52 located in the corresponding dents 48, 49, 50 will prevent the sliding part 9 to slide with respect to the guiding part 8. However, as soon as the person pushes or pulls on the sliding part 9 with a larger force, thereby overcoming the predetermined spring force of springs 53, the inclined surfaces 55 of the pens 52 will slide over the incised surfaces 56, 57 of the dents 49, 50. It will be more difficult to move the pens 52 out of the dents 50 with the smaller angle A1 than out at the dents 49 with the larger angle A1. The angles A1, A2 are preferably between 60-140 degrees and can be made as small or as larger as desired. It is also possible to have the same angle A1, A2 at each dent 48, 49, 50. It is also possible to have different angles with respect to the vertical on the opposite side of a dent so that moving in one direction requires a larges initial force than moving in an opposite direction.

By the embodiment as shown in figures 13, 14, 15, the lower end 54 of the pen 52 has a rounded end 58 being located in a hemisphere shaped dent 48, 49, 50. The working of this embodiment is the same as the above described embodiment with the frustoconical shaped lower ends of the pens and frustoconical shaped dents. The force required to remove the pens out of the dents and the feeling when the pens enter the dents will differ.

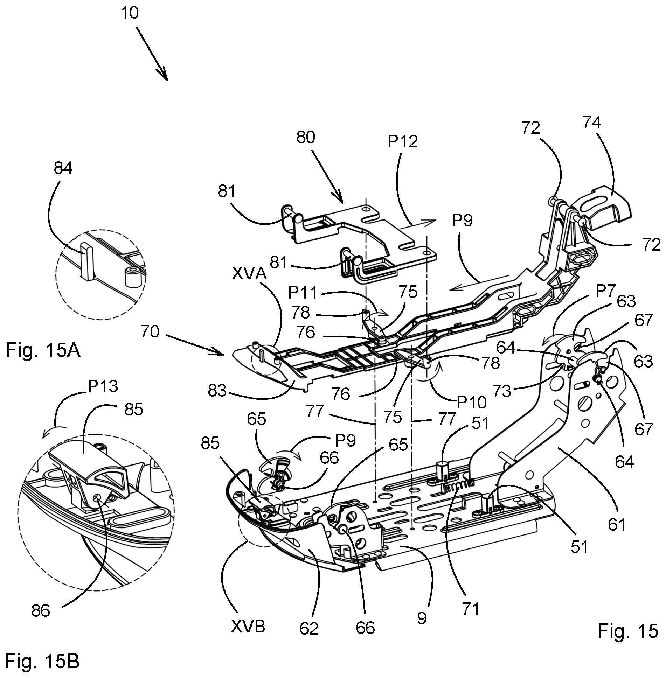

Figures 15-17 show the mounting element 10 of the child vehicle seat 1. The mounting element 10 comprises three main parts as shown in figure 15. The lower part is mounted on the sliding part 9. It comprises a rear part 61 and a front part 62. The rear part 61 comprises two hooks 63 being pivotable under spring force in the direction as indicated by arrow P7 about pivot axes 64. The front part 62 comprises two hooks 65 being pivotable under spring force in the direction as indicated by arrow P8 about pivot axes 66. The hooks 63 pivot in opposite direction to the hooks 65. Each hook 63, 65 comprises an recess 67 to receive a rod mounted on the lower side of the child seat. Such rods are commonly known and not shown here.

A middle part forms a slide 70 being slidable in and opposite to the direction as indicated by arrow P9. The slide 70 is pressed under spring force of spring 71 in the direction opposite to arrow P9. At a rear end the slide 70 is provided with two pens 72 being in abutment with surfaces 73 of the hooks 63 when the hooks 63 are being moved against spring force in the direction opposite to arrow P7. The slide 70 is at the rear end also provided with an actuation button 74 to be actuated to push the slide 70 in the direction as indicated by arrow P9.

At the centre the slide 70 is proved with two levers 75, each lever 75 being pivotable connected at one end 76 to the slide 70, in the middle pivotable about pivot axis 77 connected to the sliding part 9 and at the other end 78 pivotable connected to an additional slide 80.

The additional slide 80 forms the third and upper part. At a front end the additional slide 80 is provided with two pens 81 being in abutment with surfaces 82 of the hooks 65 when the hooks 65 are being moved against spring force in the direction opposite to arrow P8.

When the slide 70 is being moved in the direction indicated by arrow P9, the levers 75 will pivot about the pivot axes 77 in the direction as indicated by arrows P10, P11, thereby forcing the additional slide 80 to slide in the direction as indicated by arrow P12. By moving the slide 70 and the additional slide 80, the pens 72, 81 will no longer be in contact with the surfaces 73, 82 and the hooks 63, 65 will move under spring force in the direction indicated by arrows P7, P8, thereby releasing the pens of the child seat. Subsequently, the child seat can be removed from the mounting element 10.

The slide 70 can be moved in the direction indicated by arrow P9, either by pushing on the actuation button 74 at the rear side of the child vehicle seat 1 or pulling on a handle 83 of the slide 70 at the front side of the child vehicle seat 1.

At the front side of the slide 70 at least one vertically extending rod 84 is located. The rod 84 cooperates with an indication knob 85. The indication knob 85 is pivotable about a pivot axis 86 against spring force in the direction as indicated by arrow P13 by rod 84.

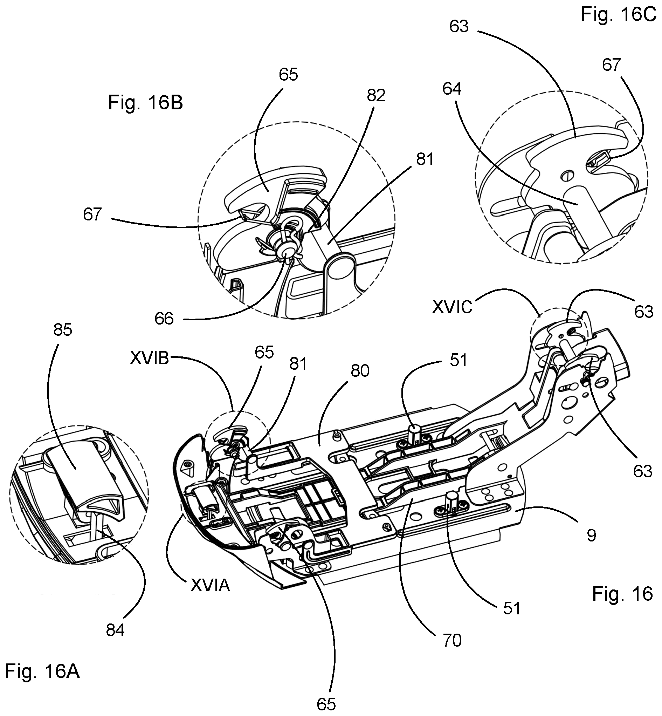

When the hooks 63, 65 are in a closed position (see figure 16-16C) receiving the rods of the child seat in the recesses 67 a part of the indication knob 85 is visible through an opening in a cover (not shown) of the child vehicle seat, having for example a green colour. The green colour indicates that all the hooks are closed.

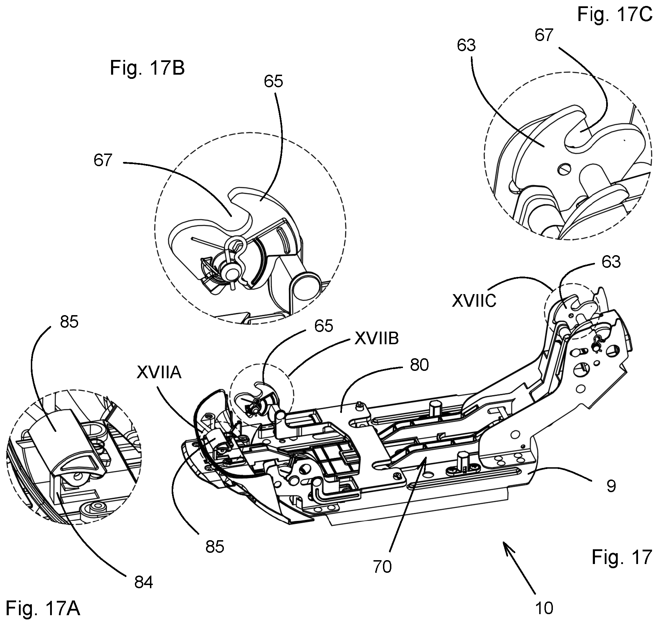

When the hooks 63, 65 are in an open position (see figure 17-17C), releasing the rods of the child seat from the recesses 67 another part of the indication knob 85 is visible through an opening in the cover (not shown) of the child vehicle seat, having for example a red colour. The red colour indicates that the hooks are not closed.

In a crash the slide 70 wants to move forward with respect to the sliding part 9 due to inertia, whereby the hooks 63 might undesirably release the child seat. Due to the fact that in such a case the additional slide 80 will also moves forward due to inertia, it will keep the hooks 65 and thus also the hooks 63 closed. Both the weight of both movable parts as well as the dimensions of the levers 75 will define this balance so that in case of a crash the hooks 63, 65 will be kept closed.

Figure 21 shows a front view of the child vehicle seat 1 seen in a direction opposite to the driving direction of the vehicle with a first kind of child seat 87. The child seat 87 is in a side facing position. The child seat 87 is detachable connected to the sliding part 9. The sliding part 9 is located on top of the rotating part 4. The rotating part 4 is located on top of the base 2. The base 2 is provided with a support leg 88 resting with its lower end on a floor of the vehicle. The child seat 87 can be lifted of the sliding part 9 by means of a handle 89. At the bottom side the child seat 87 is provided with rods cooperating with the hooks 63, 65 as described above.

Figure 22 shows a front view of the child vehicle seat 1 seen in a direction opposite to the driving direction of the vehicle with a second kind of child seat 90. The child seat 90 is in a side facing position. The child seat 90 can be detachable connected or being fixed to the sliding part 9. The sliding part 9 is located on top of the rotating part 4. The rotating part 4 is located on top of the base 2. The base 2 is provided with a support leg 88 resting with its lower end on a floor of the vehicle. In case that the child seat 90 is removable connected to the sliding part 9, the bottom side of the child seat 90 is provided with rods cooperating with the hooks 63, 65 as described above. In such a case both the child seat 87 and the child seat 90 can be used in the same child vehicle seat 1.

Since the child seat 90 is intended for larger children, whereby the child can leave the child seat 90 by itself so that it is also possible to have the child seat 90 being fixed to the slide 9. This has the advantage that no mechanism with hooks 63, 65 is needed but has the disadvantage that the child seats 87, 90 can not be exchanged.

According to EU regulations the child vehicle seat together with the child might be maximum 33 kg, meaning that with a child of 18 kg at an age of 4 years old, the child vehicle seat may not exceed 15 kg.

It is also possible to use the bearing elements by other embodiments of child vehicle seats whereby for example the rotating part is mounted on top of the sliding part.

It is also possible to have the dents on the sliding part and the pen cooperating mounted with the dents on the guiding part.

It is also possible to use other first locking elements well known in the art, like the one as described US7984946B1.

It is also possible to have engagement holes at for example 45 degrees in each direction seen from the forward facing direction. This might be advantageous by vehicles comprising only two front doors and no rear doors. By locking the rotating part at 45 degrees, the sliding part and the child seat attached thereto can be moved in the direction to the nearest front door.

It is also possible to use the first locking element to lock the rotating part to the base for example in the side facing position or in the 45 degrees positions.

It is also possible to use the mechanism for let the sliding part overcome a predetermined force before being able to slide from its current position to a next position, by other sliding parts of child vehicle seats, for example not provided with a rotating part.

It is also possible to use the unlocking means located on the front side as well as on the rear side of the child vehicle seat, by other kind of child vehicle seats not provided with a rotating part and/or a sliding part.

It is also possible to use the movable part and/or the additional movable part by other kind of child vehicle seats not provided with a rotating part and/or a sliding part.

### LIST OF REFERENCE SIGNS

1 child vehicle seat
2 base
3 base plate
4 rotating part
5 rotation axis
6 bottom plate
7 top plate
8 guiding plate
9 sliding part
10 mounting element
11 first locking means
12 first handle
13 second handle
14 connecting piece
15 pivot axis
16 end
17 first end
18 longitudinal rod
19 holder
20 slot
21 locking pen
22 horizontal pen
23 vertically extending slot
24 bracket
25 connecting piece
26 lever
27 pivot axis
28 end
29 second end
30 locking hole
35 engagement element
36 opening
37 opening
38 spring
40 bottom
41 engagement hole
42 engagement hole
45 sloped part
46 bearing
48 dent
49 dent
50 dent
51 holder
52 pen
53 spring
54 lower end
55 inclined surface
56 inclined surface
57 inclined surface
58 rounded end
61 rear part
62 front part
63 hook
64 pivot axis
65 hook
66 pivot axis
67 recess
70 slide
71 spring
72 pen
73 surface
74 actuation button
75 lever
76 end
77 pivot axis
78 end
80 additional slide
81 pen
82 surface
83 handle
84 rod
85 indication knob
86 pivot axis
87 child seat
88 support rod
89 handle
90 87 child seat
A1 angle
A2 angle
F driving direction
S sliding direction
P1 arrow
P2 arrow
P3 arrow
P4 arrow
P5 arrow
P6 arrow
P7 arrow
P8 arrow
P9 arrow
P10 arrow
P11 arrow
P12 arrow
P13 arrow
P20 arrow

## Claims

1. A child vehicle seat (1) comprising a base (2) detachably connectable to a vehicle seat and a child seat detachably connected to the base (2), whereby the child vehicle seat (1) is provided with unlocking means to unlock the connection between the child seat and the base (2), **characterized in that** the base (2) is provided with pivotable hooks (63, 65) being connectable to connecting elements of the child seat, whereby the hooks (63, 65) are movable against spring force by means of a movable part to an open position wherein the child seat can be removed from the base (2), which movable part extends from the front side to the rear side of the child vehicle seat (1), whereby the movable part is provided with an additional movable part being movable in opposite direction as the movable part, whereby a first set of hooks (63) is pivotable by means of the movable part in a first direction, whilst a second set of hooks (65) is pivotable by means of the additional movable part in a second direction being opposite to the first direction.

2. A child vehicle seat (1) according to claim 1, **characterized in that** the child vehicle seat (1) comprises a rotating part (4) being rotatable with respect to the base (2) about a rotation axis (5) from at least a forward facing position or a rearward facing position seen in a driving directing of the vehicle in use to a side facing position directed to a door of the vehicle and vice versa, a sliding part (9) being slidable with respect to the base (2) in a sliding direction (S) substantially perpendicular to the driving direction (F) of the vehicle, a child seat connected to the base (2) via the sliding part (9) and the rotating part (4), wherein the child seat and the sliding part (9) are slidable together with respect to the rotating part (4), wherein the child vehicle seat (1) comprises first locking means (11) to detachably lock the rotating part (4) to the base (2) in the at least forward facing position or rearward facing position, as well as second locking means to detachably lock sliding of the sliding part (9) with respect to the rotating part (4).

3. A child vehicle seat (1) according to claim 2, **characterized in that** by unlocking the first locking means (11) the rotating part (4) together with the sliding part (9) and child seat are rotatable to the side facing position, whereby near or at the side facing position the second locking means will be automatically unlocked to allow the sliding part (9) together with the child seat to slide in the sliding direction (S).

4. A child vehicle seat (1) according to claim 2 or 3, **characterized in that** the first locking means (11) comprises a first and second handle (13) located on opposite sides of the child vehicle seat (1), whereby a locking pen (21) is moved out of a locking hole (30) by moving the first handle (12) in clockwise direction about the rotation axis (5) or moving the second handle (13) in counter clockwise direction about the rotation axis (5).

5. A child vehicle seat (1) according to claim 4, **characterized in that** the locking pen (21) is movable connected to the rotating part (4), whilst the locking hole (30) is located in the base (2).

6. A child vehicle seat (1) according to one of the preceding claims 2-5, **characterized in that** the first locking means (11) detachably lock the rotating part (4) to the base (2) in the at least forward facing position as well as the rearward facing position.

7. A child vehicle seat (1) according to one of the preceding claims 2-6, **characterized in that** the second locking means comprises at least one engagement element movably extending through an opening (36, 37) in the rotating part (4), which engagement element is movable through the opening (36, 37) from a first position wherein the engagement element is located in an engagement hole (41, 42) of the sliding part (9) and the opening (36, 37) to lock the sliding part (9) with respect to the rotatable part, to a second position wherein the engagement element is located in an engagement hole (41, 42) of the base (2) and the opening (36, 37) to limit rotation of the rotatable part with respect to the base (2) to a predetermined angle.

8. A child vehicle seat (1) according to claim 7, **characterized in that** the predetermined angle is in the range from zero degrees to 20 degrees, more preferably 10 degrees.

9. A child vehicle seat (1) according to one of the preceding claims 2-8, **characterized in that** the sliding part (9) is slidable in the sliding direction (S) from a start position via at least one intermediate position to an end position.

10. A child vehicle seat (1) according to claim 9, **characterized in that** at least at one of the start position, the at least one intermediate position or the end position, the sliding part (9) must overcome a predetermined force before being able to slide from its current position to a next position.

11. A child vehicle seat (1) according to claim 10, **characterized in that** the sliding part (9) or the rotating part (4) is provided with a pen (52, 72, 81) being located under the predetermined spring force in a dent (48, 49, 50) located in the other of the sliding part (9) or the rotating part (4).

12. A child vehicle seat (1) according to one of the preceding claims, **characterized in that** the child seat is detachably connected to the base (2), whereby the child vehicle seat (1) is provided with unlocking means to unlock the connection between the child seat and the sliding part (9), which unlocking means are located on a front side as well as on the rear side of the child vehicle seat (1).

13. A base for a child vehicle seat, which base (2) is provided with pivotable hooks (63, 65) being connectable to connecting elements of a child seat being detachably connectable to the base (2), whereby the hooks (63, 65) are movable against spring force by means of a movable part to an open position wherein the child seat can be removed from the base (2), which movable part extends from the front side to the rear side of the child vehicle seat (1), whereby the movable part is provided with an additional movable part being movable in opposite direction as the movable part, whereby a first set of hooks (63, 65) is pivotable by means of the movable part in a first direction, whilst a second set of hooks (63, 65) is pivotable by means of the additional movable part in a second direction being opposite to the first direction.

14. A base (2) suitable for a child vehicle set according to one of the preceding claims, which base (2) being detachably connectable to a vehicle seat, said base (2) comprises a rotating part (4) being rotatable with respect to the base (2) about a rotation axis (5) from at least a forward facing position or a rearward facing position seen in a driving directing of the vehicle in use to a side facing position directed to a door of the vehicle and vice versa, a sliding part (9) being slidable with respect to the base (2) in a sliding direction (S) substantially perpendicular to the driving direction (F) of the vehicle, wherein the sliding part (9) is slidable with respect to the rotating part (4), wherein the child vehicle seat (1) comprises first locking means (11) to detachably lock the rotating part (4) to the base (2) in the at least forward facing position or rearward facing position, as well as second locking means to detachably lock sliding of the sliding part (9) with respect to the rotating part (4).
